# EUROPÄISCHE PATENTSCHRIFT

(11) **EP 1 914 488 B1**
(45) Veröffentlichungstag und Bekanntmachung des Hinweises auf die Patenterteilung: **06.04.2016**
(21) Anmeldenummer: 07020264.3
(22) Anmeldetag: 17.10.2007
(51) Int. Cl.: F24J 2/04, F24J 2/26

(54) **Solarkollektor mit kombiniertem Luftwärmeentzug und Flüssigkeitserwärmung**
Combined solar collector for removal of hot air and production of warm water
Collecteur solaire combiné pour production d'air chaud et chauffage d'un liquide

(30) Priorität: 21.10.2006 DE 202006016294 U
(43) Veröffentlichungstag der Anmeldung: 23.04.2008
(73) Patentinhaber: CONSOLAR Solare Energiesysteme GmbH, 60489 Frankfurt am Main (DE)
(72) Erfinder: Leibfried, Ulrich, 79539 Lörrach (DE)
(74) Vertreter: Huwer, Andreas

(56) Entgegenhaltungen:
- EP-A2- 1 413 835
- EP-A2- 1 830 140
- DE-A1- 10 104 900
- DE-U1-202004 008 888
- DE-U1-202006 003 399
- US-A- 4 172 442
- US-A- 4 207 867

## Beschreibung

Die Erfindung betrifft Solarkollektoren für Solar- und/oder Wärmepumpenanlagen insbesondere zur Bereitstellung von Warmwasser und Heizenergie.

Solaranlagen zur kombinierten solaren Warmwassererwärmung und Heizungsunterstützung sind Stand der Technik. Mit aktueller Technik beträgt die typische Energieeinsparung heizüngsunterstützender Solaranlagen allerdings nur ca. 20 - 30 %. Üblicherweise ist eine weitere (Haupt-) Energiequelle, i. d. R. ein Öl- oder Gaskessel nötig.

Stand der Technik ist ebenfalls die Kopplung mit z. B. elektrischen Wärmepumpen. Antriebsenergie hierfür ist Strom, weswegen nur dann primärenergetisch eine Einsparung erfolgt, wenn die Jahresarbeitszahl deutlich über 3 liegt.

Wärmepumpen für Heizung und Warmwasser werden hauptsächlich in Verbindung mit Erdsonden oder Erdreichwärmetauschern eingesetzt. Dies ist ein bedeutender Kostenfaktor und schränkt den Einsatz ein. Die kostengünstigere und montagefreundlichere Alternative - Luftwärmepumpen - haben den Nachteil der wesentlich schlechteren Arbeitszahlen bzw. des höheren Jahresstromverbrauchs. Das kommt daher, dass gerade, wenn die Außentemperaturen am tiefsten sind, und damit der Stromverbrauch der Wärmepumpe am größten, auch der Heizwärmebedarf am höchsten ist. Thermische Solaranlagen werden üblicherweise parallel zur Wärmepumpe betrieben. Dadurch ist der Betrieb weder für die Wärmepumpe noch für den Kollektor optimal, da beide Komponenten auf einem erhöhten Temperaturniveau betrieben werden.

In der Schrift DE 103 00 427 A1 wird eine Kombination von thermischer Solaranlage und Wärmepumpe beschrieben, bei der aufgrund einer speziellen Bauart des Kollektors und Einsatz eines Wasser-Eisspeichers die vollständige Wärmeversorgung eines Niedrigenergiehauses ermöglicht wird, ohne zusätzliche Erdsonden.

Durch serielle Verschaltung mit einer Wärmepumpe und einem Wasser-/Eisspeicher wird mit ca. 20 m² Kollektorfläche eine Energieeinsparung von über 85 % erreicht. Die Wärmepumpe wird eingesetzt, um. im Winter der Sole Wärme zu entziehen, auch wenn sie von der Sonne nur auf wenige Grad Celsius aufgewärmt wird. In der Wärmepumpe wird hieraus zum Heizen nutzbare Wärme erzeugt. Damit können die Sonnenkollektoren im Winter mit sehr tiefen Temperaturen betrieben werden und haben dadurch fast keine Wärmeverluste, d. h., maximalen Wirkungsgrad.

Dies alleine würde jedoch nicht ausreichen, um den Heizbedarf zu decken. Um auch bei längeren Schlechtwetterperioden die Wärmeversorgung sicher zu stellen, sind die Sonnenkollektoren so gestaltet, dass sie bei Bedarf auch der Umgebungsluft Wärme entziehen können - auch, wenn die Sonnen nicht scheint. So produziert das System bei jedem Wetter Wärme: In der Regel sind die kältesten Wintertage klar, mit Sonnenschein. Der Solgrertrag der Sonnenkollektoren ist dann gut genug zum Heizen. Bei bedecktem Himmel dagegen sind i. d. R. auch die Lufttemperaturen nicht extrem tief.

Dies sind Temperaturen, bei denen die Wärmepumpe der Luft mit gutem Wirkungsgrad genügend Wärme entziehen kann.

Ab den ersten wärmere Frühlingstagen bis in den Herbst sind die Solarerträge i. d. R. auch ohne Wärmepumpe ausreichend, um den kompletten Wärmebedarf zu decken. Das heißt, dass in dieser Zeit für das System nur ein ganz geringer Strombedarf besteht, fast alle benötigte Energie kommt direkt von der Sonne.

Zentrale Komponente des beschriebenen Systems ist der Solarkollektor mit kombinierter Möglichkeit des Luftwärmeentzugs, der eine Wärmepumpe alleine, ohne zusätzliche Erdsonden, mit Niedertemperaturwärme versorgen kann. Die Ausgestaltung dieses Solarkollektors ist Gegenstand dieser Erfindung.

In der Regel ist für einen effektiven Wärmeübergang und geringe Temperaturdifferenzen zwischen Luft und erwärmter Flüssigkeit das aktive Durchblasen von Luft nötig. Der in der DE 103 00 427 A1 beschriebene Aufbau des kombinierten Solarkollektors hat folgende Nachteile:
- Die Solarkollektoren weisen jeweils eine Luftöffnung unten und oben auf, die oben verschlossen werden kann. Wenn diese Verschlussklappe nicht ganz dicht ist, kann im Solartietrieb, in dem Flüssigkeit erwärmt wird, die warme Luft, die sich in den Kollektoren befindet, durch Undichtigkeiten oben ausströmen und dadurch zu erhöhten Wärmeverlusten führen. Außerdem bedeutet die Klappe Aufwand und stellt eine potentielle Wartungskomponente dar.
- Die Luft strömt auch zwischen Absorber und Abdeckscheibe, was zu Verstaubung dieser Flächen und damit Ertragsminderung führen kann.

Um eine Verschmutzung von Absorber- und Glasfläche zu vermeiden kann die Luft durch Filter, angesaugt werden. Dies hat den Nachteil, eine regelmäßige Wartung zu erfordern und erhöht gleichzeitig den Widerstand und damit den Stromverbrauch des Ventilators. In der DE 101 18 572 wird ein System beschrieben, in dem Sonnenkollektoren und eine Wärmepumpe mit einem Luftkühler kombiniert sind. Gegenüber der kombinierten Nutzung eines Gerätes sowohl als Strahlungsumwandler als auch als Luft-Sole-Wärmetauscher ergeben sich Montagenachteile (Installation zweier Geräte, aufwändigere Verrohrung, erhöhter Platzbedarf).

In der US 4 198 956 wird ein Kollektor beschrieben, der atternativ oder gleichzeitig sowohl Wasser als auch Luft mit Solarstrahlung erwärmen kann. Aufgabenstellung der hier beschriebenen Erfindung ist es dagegen, Sole mit Solarstrahlung und/oder durch Wärmeentzug aus der Luft zu erwärmen. Dies führt zu anderen physikalischen und konstruktiven Anforderungen und damit Lösungen. Der in der US-Patentschrift beschriebene Aufbau hat beispielsweise eine zu kleine Wärmeübertragungsfläche für die Luft, was zu einem schlechten Wärmeübergang bzw. einer großen Temperaturspreizung zwischen Luft und der zu erwärmenden Sole führt Ein weiterer Nachteil einer Ausgestaltung ist, dass auch hier die Luft direkt zwischen Absorber und Abdeckscheibe strömt was zu Verstaubung dieser Flächen und damit Ertragsminderung führen kann, außerdem die durch eine Klappe verschließbare Öffnung am Kollektor oben (Wärmeverluste, s. o.).

In der DE 100 04 180 A1 wird ein Kollektor beschrieben, in dem ebenfalls sowohl Flüssigkeit als auch Luft erwärmt werden kann, außerdem kann die Flüssigkeit bei Bedarf auch durch durchströmende Luft erwärmt werden. Grundsätzlich entspricht das der Aufgabenstellung der hier beschriebenen Erfindung. allerdings sind die Vorschläge der Offenlegungsschrift sehr aufwändig und sie weisen gegenüber der im Folgenden beschriebenen Ausgestaltung einige Nachteil auf, insbesondere den, dass die Luftzu- und abfuhr über Kanäle und eine zentrale Lüftungsanlage erfolgt, was einen deutlich erhöhten Montageaufwand und stark eingeschränkte Anwendungsmöglichkeiten zur Folge hat. Ein weiterer Nachteil ist, dass im Solarbetrieb, in dem Flüssigkeit erwärmt wird, die warme Luft, die sich in den Kollektoren befindet, direkt mit den oben angeschlossenen Luftkanälen kommuniziert und so für große Wärmeverluste des Kollektors sorgt. Dieses Problem wird noch vergrößert, wenn die eingesetzten Luftklappen nicht 100 % dicht sind.

Aufgabenstellung der US 4 207 867 A ist, sowohl Flüssigkeit als auch Luft über den Solarabsorber zu erwärmen. Dazu werden die Luftkanäle mehrer Kollektoren miteinander verbunden, so dass die durch die absorbierte Solarstrahlung erwärmte Luft und Flüssigkeit in das zu beheizende Gebäude oder einen Speicher geleitet erden kann.

Luft wird auf der zur Sonne gewandten Oberseite zwischen Strahlung absorbierender Fläche und transparenter Abdeckung geleitet und dabei gleichzeitig mit der Flüssigkeit durch die von dem Absorberblech absorbierte Solarstrahlung auf direkt nutzbare Temperaturen erwärmt. Sowohl die Luftkanäle (52) In US 4 207 867 als auch der in Fig. 5 dargestellte Aufbau dienen der Vergrößerung der Oberfläche und Verbesserung des Wärmeübergangs zwischen Luft und Absorber. Um erhöhte Wärmeverluste von der erwärmten Luft über die transparente Abdeckung nach außen zu vermeiden, ist eine doppelte transparente Glasabdeckung (34) + (32) vorgesehen.

In der US 4 207 867 befindet sich der Lüftkanal bzw. Luftaustritt (50) innerhalb des Kollektorgehäuses hinter einer isolierten Platte (40), damit die erwärmte Luft sich nicht wieder abkühlt. Der Aufbau ist so gewählt, damit Flüssigkeit und Luft parallel zueinander in der gleichen Richtung strömen, solange sie in Kontakt mit dem Absorber sind, was dort sinnvoll ist, da beide Massenströme gleichzeitig durch absorbierte Solarstrahlung erwärmt werden.

In der EP 1 830 140 A2, Familienmitglied der vorveröffentlichten DE 20 2006 003 399 U1, wird ein Hybridkollektor für die simultane Erwärmung von Flüssigkeit und Luft durch Solarstrahlung beschrieben, wobei die zu erwärmenden Medien im Gegenstrom zueinander geführt werden.

Auch in der DE 20 2004 008888 U1 wird ein Sofarköflektor für die Erwärmung von Luft und Wasser durch Solarstrahlung beschrieben (Absatz 0003). Die Luft wird in dem Raum zwischen Absorber und Glas geleitet. Luft und Wasser werden im Gleichstrom geführt: Der Lufteintritt (4) ist links oben ebenso wie der Rücklaufstutzen (6) für das zu erwärmende Wasser (Absatz 0013), Luftaustritt (5) und Wasser-Vorlaufstutzen (7) befinden sich links unten.

Aufgabenstellung dieser Erfindung ist die Darstellung eines Solarkollektor mit kombinierter Möglichkeit des Luftwärmeentzugs, der sich durch folgende Eignenschaften auszeichnet:
- eigensicherer Aufbau (möglichst unanfällig gegen den Ausfall von beweglichen Teilen wie Klappen und gegen Staub)
- geringe Wärmeverluste und hohe Effizienz im Solarbetrieb
- geringe Temperaturspreizung im Luft-Flüssigkeit-Wärmeaustausch
- flexible und einfache Installationsmöglichkeiten (kein Bedarf von Lüftungkanälen)
- kostengünstige Herstellbarkeit

Die Aufgabenstellung wird erfindungsgemäß folgendermaßen gelöst:

Der Kollektor hat beide Öffnungen, für den Luftein- und austritt im unteren Bereich. Die Luft strömt dann U-förmig in dem Kollektor zuerst nach oben und dann wieder nach unten. Dies hat folgende Vorteile:
- im Solarbetrieb kann keine warme Luft durch eine etwaig undichte Klappe nach oben austreten, d. h. minimierte Wärmeverluste.
- Auf eine Klappe kann komplett verzichtet werden, d. h., reduzierter Aufwand und reduziertes Ausfall- und Wartungspotenzial.

Um einen optimalen Wärmeübergang zu erreichen, werden Luft und Sole im Gegenstrom zueinander geführt. Da der Luft-Wärmeentzug nur mit einer geringen Abkühlung der Luft verbunden sein soll, müssen alle Kollektoren einer Anlage parallel geschaltet werden. Dies wiederum stellt erhöhte Anforderungen an die Hydraulik für die Sole, um eine gute Gleichverteilung bei z. B. 10 durchströmten Absorbern zu erzielen. Eine sichere Verrohrungsart stellt der Aufbau mit zwei parallel verschalteten Sammlerrohren und einer Mäanderverrohrung darf. Erfindungsgemäß werden die beiden Sammlerrohre im unteren Bereich des Kollektors angeordnet. Sie werden durch eine Doppelmäander miteinander verbunden, die auf der einen Hälfte des Kollektors nach oben verläuft und auf der anderen Hälfte nach unten. Dies. hat folgende Vorteile:
- Der Druckverlust der Mäander im Vergleich zum Sammler ist so hoch, dass sich eine gute Gleichverteilung der Soteströmung bei parallel verschalteten Modulen einstellt. Gleichzeitig ist der Querschnitt des Mäanderrohrs groß genug, um eine sichere Durchströmung zu gewährleisten. Bei einer so genannten Harfenverrohrung (mehrere Röhrchen parallel verschaltet zwischen den Sammlern eines Mödüls) wären so kleine Querschnitte nötig, dass die Anfälligkeit gegen Verstopfung durch Schmutz oder gegen Fertigungstoleranzen sehr hoch wäre.
- Die Mäanderverrohrung ermöglicht eine sichere Entlüftung der einzelnen Module bei gleichzeitiger Anordnung der Sammler nebeneinander unten, eine Position, die die Verbindung der Kollektoren bei der Montage erleichtert.

Der Kollektor ist erfindungsgemäß mit einem kleinen integrierten Ventilator ausgestattet. Dies hat folgende Vorteile:
- eine aufwändige und Platz raubende Lüftungsverrohrung entfällt.
- Wärmeverluste über die Lüftungskanäle werden vermieden.
- Beim Ausfall eines Lüfters wird die Gesamtleistung des Systems mit z. B. 10 Kollektoren nur um 10 % reduziert, d. h., erhöhte Sicherheit durch Redundanz.

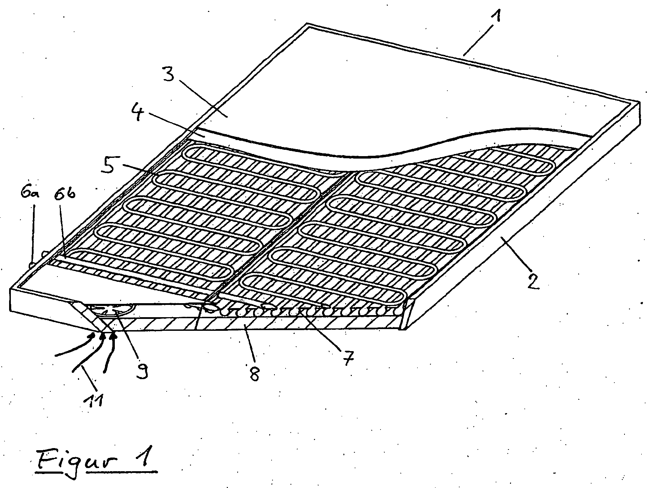

Wenn der Kollektor, wie in Fig. 1 dargestellt, von hinten die Luft ansaugt, können weitere Vorteile damit erreicht werden:
- Bei hinterlüfteter Montage an Fassade oder auf dem Dach können Wärmeverluste der Gebäudehülle durch den Wärmeentzug der Luft im Kollektor wieder gewonnen werden.
- Bei dachintegrierter Montage kann ggf vorgewärmte Luft des (unisolierten) Dachbodens genutzt werden, d. h., ebenfalls Rückgewinnung von Wärmeverlusten und Nutzung der Solarwärme, die durch Aufheizen der Dachziegel entsteht.

Statt Außenluft kann auch Abluft durch den Kollektor geblasen werden, wodurch eine Wärmerückgewinnung erfulgt.

Die Luft wird im Kollektor nur unterhalb des Absorbers 4 geblasen. Der Absorber schließt dazu ringsum weitgehend dicht mit dem Kollektorrahmen 2 ab (eine luftdurchlässige aber staubsichere Abdichtung z. B. aus Filz ist zulässig). Zwar wird damit die Oberseite des Absorberbleches 4 nicht mehr für den Luft-Wärmeübergang genutzt, es ergeben sich aber zwei wichtige Vorteile daraus:
- Die Verschmutzung von Absorberfläche 4 und Innenseite der transparenten Abdeckung 3 durch die durchgeblasene Luft 10 wird vermeiden.
- Im Solarbetrieb kann die Luft nicht zwischen kühler transparenter Abdeckung und der Unterseite des Absorberblechs zirkulieren, wodurch erhöhte Wärmeverluste entstünden.

Um einen genügend guten Wärmeübergang zwischen Luft und Flüssigkeit zu erreichen, ist auf der Unterseite des Absorbers ist eine vergrößerte Oberfläche für den Luft-Wärmeaustausch nötig. Dies erfordert aber bei herkömmlicher Technik eine aufwändige Bauart, insbesondere in Verbindung mit der oben beschriebenen Mäander-Verrohrung. Eine rationelle Möglichkeit der Oberflächenvergrößerung wird im Folgenden beschrieben:

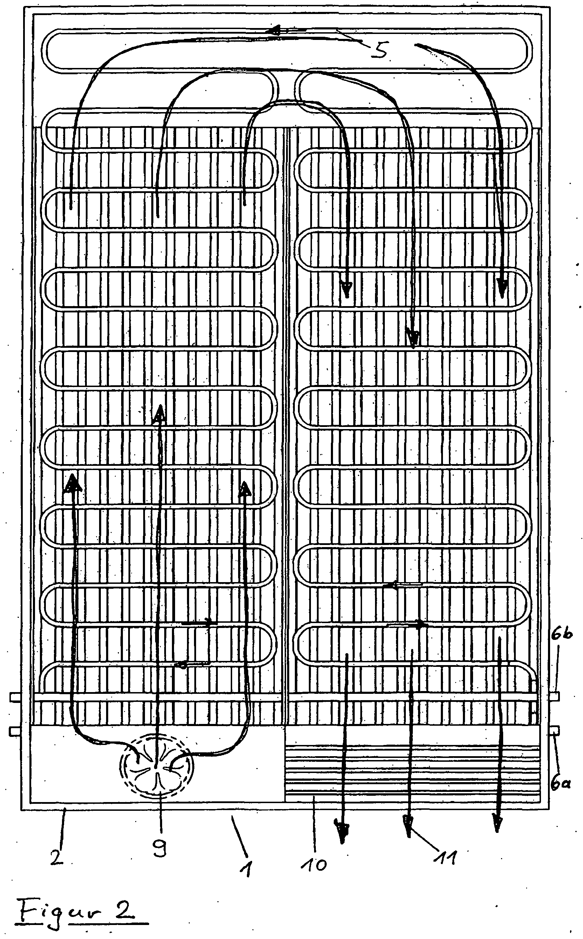

Der aus Sole-Verrohrung und Absorberblech bestehende Solarabsorber wird auf ein zweites, speziell geformtes Blech gelegt. Dieses Blech hat in Längsrichtung eine Wellen- oder Trapezstruktur (im Folgenden unabhängig von der ausgestalteten Formgebung Profilblech genannt). Dieser Aufbau bringt folgende Vorteile:
- Durch die profilierte Form kann auch bei einer Mäanderverrohrung Luft zwischen dem oberen Absorberblech und dem unteren Blech strömen und Wärme auf Bleche und Verrohrung übertragen. Zusätzlich kann die Luft unter dem unteren Blech strömen, ohne dass hierfür eine besondere Abstandskonstruktion nötig ist.
- Das Profilblech 6 steht in direktem Kontakt mit den Sole-Strömungskanälen 5, so dass die Wärmeleitwege kurz sind. Die Wellenstruktur kann so geformt sein, dass die Kontaktfläche zur Verrohrung 5 möglichst groß ist, wobei bei der quer angeordneten Mäander genügend große Schlitze für die Luft vorhanden sein müssen, damit die Luft auch in dem Raum unter dem oberen Absorberblech 4 strömen kann.
- Die Profilierung bewirkt eine Oberflächenvergrößerung für den Wärmetauscher.
- Die gesamte Absorber-Wärmetauschereinheit kann ohne spezielle Konstruktionsteile für Halterung oder Luftumlenkung die Funktion der U-förmigen Luftführung (unten rein und auf der anderen Seite unten wieder raus) erfüllen: es genügt, dass das Profilblech in einem gewissen Abstand von der oberen Stirnseite des Gehäuses 2 endet, so dass die Luft von der einen Seite des kollektors zu anderen strömen kann (vergleiche Figur 2).

Eine verbreitete Herstelltechnik für Solarabsorber ist das Auflöten der Verrohrung auf das Absorberblech in einem Lötofen. Erfindungsgemäß kann nun im gleichen Arbeitsgang das Profilblech auf der Unterseite der Sole-Strömungskanäle mit aufgelötet werden. Dies hat folgende Vorteile:
- Der Wärmeübergang Profilblech - Sole-Strömungskanäle wird weiter verbessert.
- Es entsteht in der Herstellung - vom Material abgesehen - praktisch kein Zusatzaufwand, da der gleiche Arbeitsgang genutzt wird: die gesamte Absorber-Wärmetauschereinheit kann in einem Arbeitsgang rationell gefertigt werden.
- Der komplette Blech-Verrohungs-Verbund ist als fixierte Einheit in der Fertigung gut handhabbar (reduzierte Herstellkosten).

Im Folgenden wird anhand der Figuren 1 - 3 eine konkrete Ausgestaltung der Erfindung beschrieben. Figur 1 zeigt einen Kollektor 1 im Schnitt. Er besteht aus dem ggf. seitlich Isolierten Gehäuse 2, der transparenten Abdeckung 3, dem auf der Oberseite Strahlung absorbierenden Absorberblech 4, dem Sole-Strömungskanal 5, hier als Mäander ausgeführt die mit den beiden Sammlerrohren 6a und 6b verbunden ist, dem Profilblech 7, der Bodenisolierung 8 und dem Ventilator 9, der die Luft 11 ansaugen kann.

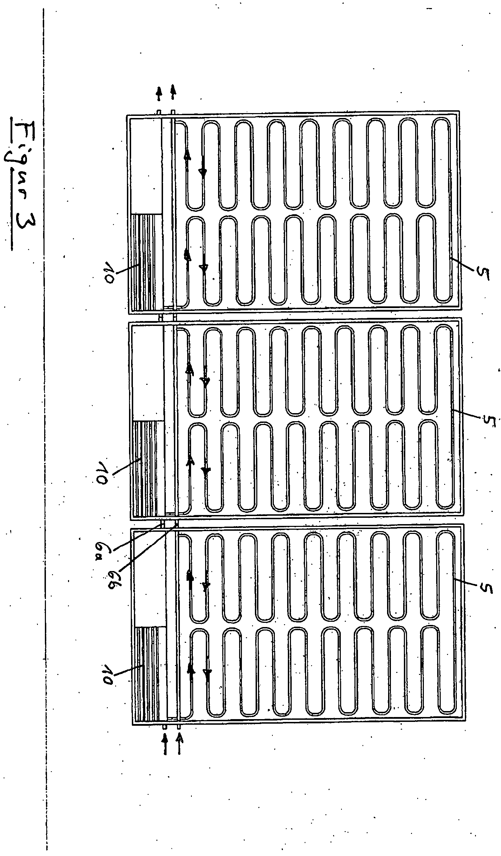

Figur 2 zeigt einen Kollektor 1 von oben. Rechts und links von dem in Figur 2 dargestellten Kollektor können weitere Kollektoren angeschlossen werden, dabei werden Jeweils beide Sammlerrohre 6a und 6b miteinander verbunden. Figur 3 zeigt drei Kollektormodule miteinander verschaltet. Durch das untere Sammlerrohr 6a strömt die zu erwärmende Sole in jeden Kollektor ein und jeweils ein Teil der Sole strömt durch die Doppelmäander eines jeden Kollektor zunächst nach oben und dann wieder nach unten, um dann den Kollektor über den Sammler 6b zu verlassen. Die Sole wird beim Durchströmen des Kollektors entweder von der Sonne erwärmt, die das obere Absorberblech 4 aufheizt, oder - falls die Sonne nicht scheint - durch Luft. Luft 11 wird mithilfe des an der Unterseite des Kollektors 1 angebrachten Ventilators 9 eingesaugt und über den auf der Oberseite angebrachten Luftauslass 10 wieder ausgeblasen. Sie strömt dabei im Kreuzgegenstrom zur Doppelmäander 5 (aufgrund der hohen Anzahl der Mäanderwindungen entspricht das quasi einem Gegenstrom-Wärmeaustausch).

Statt der beschriebenen Ausführung sind erfindungsgemäß eine Vielzahl anderer Ausführungen möglich: z. B. kann die Anordnung nach Ansprüchen 1 oder 3 und folgenden auch mit anderen Absorber-Bauformen realisiert werden, beispielsweise mit Kissen- oder Rollbondabsorbern. Statt des Profilbleches sind erfindungsgemäß auch andere Formen der Obeflächenvergrößerung möglich. Beispielsweise kann bei entsprechender Ausführung der Strömungskanäle, das untere Blech auch flach sein oder komplett entfallen.

Ein erfindungsgemäßer Aufbau mit flachem Blech besteht aus einem Verbund aus Absorberblech 4, und Sole-Strömungskanälen 5, wobei mehrere Kanäle parallel angeordnet sind und in Längsrichtung verlaufen und dem auf der Unterseite aufgebrachten zweiten (flachen) Blech 7. Durch diesen Verbund entstehen zwischen dem oberen und unteren Blech 4 und 7 Strömungskanäle für die Luft, die die Luft nach oben bzw. nach unten führen.

Oberflächen vergrößernde Strukturen können bei entsprechenden Sole-Strömungskanälen direkt aus dem oberen Absorberblech oder den Strömungskanälen selbst geformt sein.

Auch sind andere Arten der transparenten Abdeckung möglich, z. B. eine Zwei- bzw. Mehrfachabdeckung, ein mit Edelgas gefüllter oder evakuierter Raum zwischen den beiden Abdeckungen oder zwischen Abdeckung und Absorberoberseite.

Die Luftansaug- und -ausblasöffnungen können statt, wie auf Fig. 1 und 2 dargestellt, anders positioniert sein, z. B. seitlich oder an der Stirnseite des Kollektors oder auf der Oberseite über die gesamte Breite.

Zahlreiche Profilierungsformgebungen sind für das Profilblech 7 neben der in Figur 2 dargestellten Form möglich: z. B. Rechteck-, Rauten-, Dreiecks- oder Trapezprofil und runde Formen aller Art oder auch die Kombination aus beidem. Statt der Sole können auch andere Flüssigkeiten, ggf. auch Wasser verwendet werden.

## Patentansprüche

1. Solarkollektor (1) zum Erwärmen von Flüssigkeit, in dem die Flüssigkeit sowohl durch Absorption von Solarstrahlung erwärmt werden kann, als auch alternativ oder kombiniert durch den Wärmeaustausch mit Umgebungsluft, bestehend aus einem Gehäuse (2) sowie einem von der zu erwärmenden Flüssigkeit durchströmten Absorber / Luftwärmetauscher, wobei das Gehäuse auf der zur Sonne gewandten Seite mit einer transparenten Abdeckung (3) versehen ist, wobei der Kollektor (1) zwei Öffnungen für den direkten Luftein- und -austritt aus bzw. in die Umgebungsluft aufweist und die Luft U-förmig in dem Kollektor gelenkt wird und sowohl beim Aufwärts- als auch beim Abwärtsströmen in direktem Wärmeaustausch mit einem Absorberblech (4) steht, welches auf der Unterseite mit einer vergrößerten Oberfläche ausgestaltet ist, **dadurch gekennzeichnet, dass** die beiden Öffnungen im unteren Bereich des Kollektors angeordnet sind und in dem Kollektor (1) ein Ventilator (9) integriert ist, der bei der Anwendung als Luft-Sole-Wärmetauscher Luft (11) durch den Kollektor bläst, die U-förmig in dem Kollektor zuerst nach oben und dann wieder nach unten gelenkt wird, dass der Bereich unterhalb des Absorberbleches weitgehend dicht gegenüber dem Bereich oberhalb des Absorberbleches ausgeführt ist, so dass die Luft (11) nur unterhalb des Strahlung absorbierenden Absorberbleches (4) geblasen wird und dass die zu erwärmende Flüssigkeit durch die Strömungskanäle (5) im Gegenstrom oder Kreuzgegenstrom zu dem Luftstrom (11) geführt wird.

2. Solarkollektor nach Anspruch 1, **dadurch gekennzeichnet, dass** die Strömungskanäle (5) aus einer Doppelmäander bestehen und zwei Sammlerrohre 6a, 6b im unteren Bereich des Kollektors angeordnet sind, die durch die Doppelmäander so miteinander verbunden sind, dass die Flüssigkeit auf der einen Hälfte des Kollektors (1) nach oben verläuft und auf der anderen Hälfte nach unten und durch Verbindung der Sammlerrohre mit den Sammlerrohren weiterer Kollektormodule eine gleichmäßig verteilte Paralleldurchströmung aller Module erreicht wird.

3. Solarkollektor nach Anspruch 1 oder 2, **dadurch gekennzeichnet, dass** sich die Ansaugöffnung des Ventilators (9) zur Ansaugung von Außenluft (11) auf der Rückseite des Kollektors befindet.

4. Solarkollektor nach einem der Ansprüche 1 bis 3, **dadurch gekennzeichnet, dass** der kombinierte Absorber / Luftwärmetauscher des Kollektors aus einem der Strahlung zugewandten und Strahlung absorbierenden Absorberblech (4) besteht, auf dessen Unterseite sich die Flüssigkeits-Strömungskanäle (5) oder zumindest die Unterseite der Bewandung dieser Kanäle befinden, sowie einem zweiten Blech (7) unterhalb der Strömungskanäle, das sich in direktem Kontakt mit den Strömungskanälen (5) und in einem Abstand zum Absorberblech (4) befindet, so dass ein Spalt zwischen beiden Blechen entsteht, durch den Luft (11) strömen kann, wobei das zweite Blech (7) auf der Unterseite in Längsrichtung eine runde oder gekantete Wellenprofilierung aufweist und die Luft sowohl zwischen Absorberblech (4) und zweitem Blech (7) als auch unterhalb des zweiten Blechs (7) strömen kann.

5. Solarkollektor nach Anspruch 4, **dadurch gekennzeichnet, dass** das zweite Blech (7) Luftkanäle erzeugt, die die Luft (11) auf der einen Seite nach oben führen und auf der anderen wieder nach unten, wobei das Blech (7) mit Abstand zur oberen Stirnseite des Kollektors endet, so dass die auf der einen Hälfte nach oben geführte Luft (11) zur anderen Seite überströmen kann und dort wieder nach unten strömt.

6. Solarkollektor nach Anspruch 4 oder 5, **dadurch gekennzeichnet, dass** das der Strahlung zugewandte Absorberblech (4) und das zweite Blech (7) auf der Unterseite der Strömungskanäle (5) im gleichen Arbeitsgang in einem Lötofen mit den Strömungskanälen (5) verlötet werden.

7. Solarkollektor nach einem der Ansprüche 1 bis 6, **dadurch gekennzeichnet, dass** mehrere Kollektoren (1) für parallele Durchströmung koppelbar sind.

## Claims

1. Solar collector (1) for heating liquid, in which the liquid can be heated both by absorption of solar radiation and alternatively or in combination by heat exchange with ambient air, consisting of a housing (2) and also an absorber/air heat exchanger through which the liquid to be heated flows, wherein the housing is provided on the side facing the sun with a transparent covering (3), wherein the collector (1) has two openings for directly letting air in from and out into the ambient air, and the air is directed in a U-shaped manner in the collector and, both during the upward flow and during the downward flow, is in direct heat exchange with an absorber plate (4), which is designed with an increased surface area on the underside, **characterized in that** the two openings are arranged in the lower region of the collector and integrated in the collector (1) is a fan (9), which during use as air-brine heat exchanger blows air (11) through the collector, which is diverted in the collector in a U-shaped manner, first upwards and then downwards again, **in that** the region underneath the absorber plate is made to be largely sealed with respect to the region above the absorber plate, so that the air (11) is only blown under the radiation-absorbing absorber plate (4) and **in that** the liquid to be heated is passed through the channels (5) in counter-flow or crossflow in relation to the air stream (11).

2. Solar collector according to Claim 1, **characterized in that** the flow channels (5) consist of a double meander and arranged in the lower region of the collector are two manifolds (6a, 6b), which are connected to one another by the double meander in such a way that the liquid flows upwards on one half of the collector (1) and flows downwards on the other half and, by connecting the manifolds to the manifolds of further collector modules, a uniformly distributed parallel flow through all of the modules is achieved.

3. Solar collector according to Claim 1 or 2, **characterized in that** the intake opening of the fan (9) for sucking in outside air (11) is located on the rear side of the collector.

4. Solar collector according to one of Claims 1 to 3, **characterized in that** the combined absorber/air heat exchanger of the collector consists of an absorber plate (4) facing the radiation and absorbing the radiation, on the underside of which the liquid flow channels (5), or at least the underside of the walling of these channels, is/are located, and a second plate (7) underneath the flow channels, which is in direct contact with the flow channels (5) and at a distance from the absorber plate (4), so that a gap through which air can flow is created between the two plates, wherein the second plate (7) has on the underside, in the longitudinal direction, a round or angular wave profiling and the air can flow both between the absorber plate (4) and the second plate (7) and underneath the second plate (7).

5. Solar collector according to Claim 4, **characterized in that** the second plate (7) produces air channels, which guide the air (11) upwards on one side and downwards again on the other side, wherein the plate (7) ends at a distance from the upper end face of the collector, so that the air (11) that is guided upwards on one half can flow over to the other side and flow downwards again there.

6. Solar collector according to Claim 4 or 5, **characterized in that** the absorber plate (4) facing the radiation and the second plate (7) on the underside of the flow channels (5) are soldered to the flow channels (5) in the same operation in a soldering furnace.

7. Solar collector according to one of Claims 1 to 6, **characterized in that** multiple collectors (1) can be coupled for parallel throughflow.

## Revendications

1. Capteur solaire (1) pour le chauffage de liquide, dans lequel le liquide peut être chauffé aussi bien par absorption du rayonnement solaire que, de façon alternative ou combinée, par l'échange de chaleur avec l'air ambiant, se composant d'un boîtier (2) ainsi que d'un absorbeur / échangeur de chaleur avec l'air parcouru par le liquide à chauffer, dans lequel le boîtier est muni d'un recouvrement transparent (3) sur son côté exposé au soleil, dans lequel le capteur (1) présente deux ouvertures pour l'entrée et la sortie directes d'air à partir de et dans l'air ambiant et l'air est dévié en forme de U dans le capteur et il reste en échange de chaleur direct avec une tôle d'absorbeur (4) aussi bien lors de l'écoulement ascendant que de l'écoulement descendant, la tôle étant dotée d'une surface agrandie sur son côté inférieur, **caractérisé en ce que** les deux ouvertures sont agencées dans la région inférieure du capteur et un ventilateur (9) est intégré dans le capteur (1), qui souffle de l'air (11) à travers le capteur lors de l'utilisation comme échangeur de chaleur air-saumure, air qui est dévié en forme de U dans le capteur d'abord vers le haut et ensuite de nouveau vers le bas, **en ce que** la région située en dessous de la tôle d'absorbeur est largement étanche par rapport à la région située au-dessus de la tôle d'absorbeur, de telle manière que l'air (11) ne soit soufflé qu'en dessous de la tôle d'absorbeur (4) absorbant le rayonnement et que le liquide à chauffer soit conduit à travers les canaux d'écoulement (5) à contre-courants ou à contre-courants croisés par rapport au courant d'air (11).

2. Capteur solaire selon la revendication 1, **caractérisé en ce que** les canaux d'écoulement (5) se composent d'un double méandre et deux tubes de collecte 6a, 6b sont disposés dans la région inférieure du capteur, qui sont reliés l'un l'autre par le double méandre, de telle manière que le liquide circule vers le haut sur la première moitié du capteur (1) et circule vers le bas sur l'autre moitié et, en reliant les tubes de collecte avec les tubes de collecte d'autres modules de capteurs, on obtient un écoulement parallèle uniformément réparti de tous les modules.

3. Capteur solaire selon la revendication 1 ou 2, **caractérisé en ce que** l'ouverture d'aspiration du ventilateur (9) destinée à l'aspiration d'air extérieur (11) se trouve sur le côté arrière du capteur.

4. Capteur solaire selon l'une quelconque des revendications 1 à 3, **caractérisé en ce que** l'absorbeur / échangeur de chaleur avec l'air combiné du capteur se compose d'une tôle d'absorbeur (4) tournée vers le rayonnement et absorbant le rayonnement, sur le côté inférieur de laquelle se trouvent les canaux d'écoulement de liquide (5) ou au moins la face inférieure de la paroi de ces canaux, ainsi que d'une deuxième tôle (7) en dessous des canaux d'écoulement, qui se trouve en contact direct avec les canaux d'écoulement (5) et à distance de la tôle d'absorbeur (4) de telle manière qu'il se forme entre les deux tôles une fente, à travers laquelle de l'air (11) peut s'écouler, dans lequel la deuxième tôle (7) présente sur le côté inférieur dans la direction longitudinale un profilage ondulé rond ou à arêtes, et l'air peut s'écouler aussi bien entre la tôle d'absorbeur (4) et la deuxième tôle (7) qu'en dessous de la deuxième tôle (7).

5. Capteur solaire selon la revendication 4, **caractérisé en ce que** la deuxième tôle (7) produit des canaux d'air, qui guident l'air (11) sur un premier côté vers le haut et sur l'autre côté de nouveau vers le bas, dans lequel la tôle (7) se termine à distance du côté frontal supérieur du capteur, de telle manière que l'air (11) guidé vers le haut sur la première moitié puisse déborder vers l'autre côté et s'y écoule de nouveau vers le bas.

6. Capteur solaire selon la revendication 4 ou 5, **caractérisé en ce que** la tôle d'absorbeur (4) tournée vers le rayonnement et la deuxième tôle (7) sur le côté inférieur des canaux d'écoulement (5) sont brasées aux canaux d'écoulement (5) au cours de la même opération dans un four de brasage.

7. Capteur solaire selon l'une quelconque des revendications 1 à 6, **caractérisé en ce que** plusieurs capteurs (1) peuvent être couplés en vue d'un écoulement parallèle.
